# EUROPÄISCHE PATENTANMELDUNG

(11) **EP 1 632 689 A2**
(43) Veröffentlichungstag der Anmeldung: **08.03.2006**
(21) Anmeldenummer: 05018122.1
(22) Anmeldetag: 20.08.2005
(51) Int. Cl.: F16D 48/06

(54) **Verfahren zur Kupplungssteuerung, insbesondere für Parallelschaltgetriebe mit Nasskupplungen oder Nassdoppelkupplungen**

(30) Priorität: 03.09.2004 DE 102004042643
(71) Anmelder: LuK Lamellen und Kupplungsbau Beteiligungs KG, 77815 Bühl (DE)
(72) Erfinder: Stengel, Frank, 76534 Baden-Baden (DE)

(57) **Zusammenfassung**

Ein Verfahren zur Kupplungssteuerung für Nasskupplungen enthält die Schritte: Bestimmen, ob eine Viskosität von Kupplungsfluid über einem vorgegebenen Schwellenwert liegt; wenn die bestimmte Viskosität über dem vorgegebenen Schwellenwert liegt: Anpassen der Kupplungs-/Getriebesteuerung bezüglich der Kupplungs-/Getriebesteuerung für einen Normalbetrieb derart, dass an das Kupplungsfluid zusätzliche Kupplungsenergie übertragen wird und das Kupplungsfluid durch die zusätzliche Energie erwärmt wird; und Überprüfung, ob die Viskosität des Kupplungsfluids während des veränderten Kupplungssteuerungsbetriebs über dem Schwellenwert liegt und bei Unterschreiten des Schwellenwerts: Rückkehr zur Kupplungs-/Getriebesteuerung für den Normalbetrieb.

## Beschreibung

Die Erfindung betrifft ein Verfahren zur Kupplungssteuerung von Nasskupplungen, insbesondere Nassdoppelkupplungen für z.B. Parallelschaltgetriebe.

Dadurch, dass bei Nasskupplungen bzw. Nassdoppelkupplungen in der Kupplungsglocke Getriebeöl vorhanden ist, wirkt bei Getrieben mit derartigen Kupplungen ein zusätzliches Schleppmoment auf die Getriebeeingangswellen. Das Schleppmoment ist abhängig von der Viskosität des Getriebeöls. Insbesondere bei tiefen Temperaturen der gewöhnlich verwendeten Getriebeöle, beispielsweise bei so genannten ATF-Ölen, nimmt die Viskosität des Getriebeöls und somit das Schleppmoment stark zu.

Solche aufgrund tiefer Temperaturen erhöhten Schleppmomente treten z.B. nach längeren Stillstandszeiten von Kraftfahrzeugen bei tiefen Temperaturen auf und führen dazu, dass die Dynamik des Getriebes subjektiv wahrnehmbar abnimmt. Dies äußert sich beispielsweise in längeren Schaltzeiten. Zur Kompensation dieses durch erhöhte Zähigkeiten von Kupplungsfluiden bewirkten Effekts sind verschiedene Maßnahmen bekannt.

Aus der DE 196 39 376 C1 ist eine automatisch gesteuerte Kupplung im Antriebsstrang eines Kraftfahrzeugs bekannt, bei welcher ein Stellweg eines Stellaggregats zur Kupplungsbetätigung bei hohen Viskositäten des Getriebeöls angepasst wird. Grundsätzlich wird die Kupplung mit einer analog zum Drehmoment des Motors veränderten Überanpressung geschlossen gehalten, d.h. die druckgebenden Federelemente werden jeweils so stark verspannt, dass der Kraftschluss der Kupplung die Übertragung eines Moments zulässt, welches ein begrenztes Maß oberhalb des jeweiligen Motormoments liegt. Bei tiefen Außentemperaturen wird dieses Maß der Überanpressung im Vergleich zum Normalzustand vermindert, wodurch gewährleistet wird, dass die Kupplung auch bei tiefen Temperaturen schnell öffnet, wenn eine Schaltabsicht des Fahrers erkannt wird.

Aus der DE 198 23 772 A1 ist ein Verfahren zur Kompensation erhöhter Zähigkeit eines Hydraulikfluids zum Betreiben einer automatisierten Kupplung bekannt. Zunächst wird eine charakteristische Temperatur ermittelt, beispielsweise eine Außenlufttemperatur, Kühlwassertemperatur, Ansauglufttemperatur oder eine andere Temperatur, die entweder direkt gemessen wird oder unter zur Hilfenahme eines mathematischen Modells aus anderen Größen bestimmt wird. Bei einer Bewegung des Geberkolbens in Kupplungsschließrichtung in einem System aus Geber- und Nehmerzylinder kann das verhältnismäßig zähe Hydraulikfluid eventuell nicht rasch genug eine Leitung zwischen Geberzylinder und Nehmerzylinder durchströmen, so dass sich im Arbeitsraum des Geberzylinders ein Unterdruck aufbaut. Überstreicht der Kolben im Geberzylinder bei seiner Bewegung eine Schnüffelbohrung nicht, entsteht eine Veränderung des Systemvolumens, worunter die Betätigungsgenauigkeit der Kupplung leidet. Zur Abhilfe wird bei niedrigen Temperaturen die Bewegungsgeschwindigkeit des Geberkolbens in Schließrichtung der Kupplung zu langsameren Geschwindigkeiten hin verändert. Die langsamere Geschwindigkeit reicht aus, dass das Hydraulikfluid die Leitung zwischen Geberzylinder und Nehmerzylinder durchströmen kann, damit sich im Arbeitsraum des Geberzylinders kein Unterdruck aufbaut.

Alternativ schlägt die DE 198 23 772 A1 vor, bei tiefen Temperaturen stets beim Schließen der Kupplung die Schnüffelbohrung des Geberzylinders zu überfahren, so dass beim nächsten Betätigungszyklus definierte Ausgangsbedingungen herrschen.

Aus EP 0 479 464 B1 ist schließlich ein Verfahren zur Bestimmung der Viskosität des Getriebeöls bekannt, bei dem statt dem Einbringen einer gesonderten Temperatursonde zur Messung einer charakteristischen Temperatur die Getriebesumpfschmiermittelviskosität aus einer Verlangsamung der Drehzahl der Eingangswelle erfasst wird, wenn das Getriebe im Leerlauf ist und die Kupplung ausgerückt wird. Aus den bekannten Schmiermittelcharakteristika und der Verlangsamungsrate der Welle wird die Sumpftemperatur bzw. ein Zustand "kalt/nicht kalt" festgelegt.

Der Erfindung liegt die Aufgabe zugrunde, eine Kupplungssteuerung von Nasskupplungen derart weiterzuentwickeln, dass der Zeitraum, in dem eine von der normalen Kupplungssteuerung abweichende Kupplungssteuerung vorgenommen wird bzw. in dem eine wahrnehmbare Veränderung der Schaltzeit des Getriebes vorhanden ist, kurz gehalten wird.

Diese Aufgabe wird mit einem Verfahren zur Kupplungssteuerung von Nasskupplungen mit den Merkmalen des Anspruchs 1 gelöst. Bevorzugte Ausführungsformen sind in den abhängigen Ansprüchen angegeben.

Zunächst wird bestimmt, ob die Viskosität des Kupplungsfluids, das in der Regel Getriebeöl ist, über einem vorgegebenen Schwellenwert liegt. Der Schwellenwert ist z.B. so gewählt, dass er einer Viskosität entspricht, welche durch einen Durchschnittsfahrer gerade noch nicht als trägerer Schaltvorgang wahrgenommen wird. Bei einem Überschreiten dieser Schwellenwertviskosität wird eine Kupplungssteuerung derart ausgeführt, dass zusätzliche Kupplungsenergie in Form von Wärme an das Kupplungsfluid übertragen wird, damit die Erwärmung beschleunigt wird. Solange die Kupplungssteuerung für tiefe Temperaturen mit vermehrtem Energieeintrag in das Kupplungsfluid aktiv ist, wird zumindest periodisch die Temperatur des Kupplungsfluids überprüft. Sobald die Temperatur den Schwellenwert überschritten hat oder nach einem Zeitablauf mit veränderter Kupplungssteuerung, nachdem ein Überschreiten der Schwellentemperatur erwartet werden kann, wird die Kupplungssteuerung wieder im Normalbetrieb weitergeführt.

Im Folgenden wird jeweils auf Getriebeöl als Kupplungsfluid Bezug genommen.

Der Erfindung liegt der Gedanke zugrunde, die Zeit, in der die Getriebeölviskosität deutlich gegenüber dem Normalzustand verändert ist, möglichst kurz zu halten. Dabei wird ausgenutzt, dass durch die Kupplung sowie das Getriebe im Betrieb Energie in Form von Wärme an das Getriebeöl übertragen wird. Die Erfindung nutzt diese Tatsache aus, indem gezielte, zusätzliche Maßnahmen ergriffen werden, wenn festgestellt wird, dass eine deutlich erhöhte Viskosität des Getriebeöls vorhanden ist, die zu einem rascheren Temperaturanstieg des Getriebeöls als gewöhnlich führen.

Mit den Begriffen "Normalbetrieb", "Normalzustand" und "Normalsteuerung" u.ä. wird jeweils auf den Betrieb bei normalen Temperaturen, bei denen die Getriebeölviskosität nicht deutlich erhöht ist, Bezug genommen. Die tatsächlichen Temperaturbereiche für einen solchen "Normalbetrieb" hängen von dem verwendeten Getriebeöl und dessen Temperaturverhalten ab. Bei gegenwärtig verwendeten Getriebeölen sind Bereiche, in denen eine erfindungsgemäße Kupplungssteuerung eingesetzt wird, Temperaturen unter -10°C, da in diesem Temperaturbereich das Getriebeöl bei längeren Stillstandszeiten eine stark erhöhte Viskosität aufweist.

Die Temperaturerhöhung des Getriebeöls findet zu einem wesentlichen Teil durch Übertragung von Kupplungsenergie an das Getriebeöl statt, indem die Kupplungssteuerung gegenüber dem Normalbetrieb verändert wird. Die durch das Getriebe bzw. den Motor an das Getriebe- oder Motoröl übertragenen Energien tragen wie gewöhnlich zur normalen Erwärmung, nicht jedoch zu einer beschleunigten Erwärmung bei tiefen Temperaturen, bei. Kupplungsenergie ist dabei eine solche Energie, die durch gezielte Beeinflussung der Kupplung in Form von Wärme frei wird, z.B. Kupplungsreibung, -schlupf usw.

Wie lange eine gegenüber dem Normalbetrieb veränderte Kupplungssteuerung aufrechterhalten wird, hängt von dem speziellen Viskositätsverhalten des Getriebeöls ab. Entweder wird der Kupplungssteuerungsbetrieb für kalte Temperaturen aufrechterhalten, bis die Betriebstemperatur des Getriebeöls erreicht ist. Alternativ wird bereits bei Erreichen einer bestimmten Schwellentemperatur auf normalen Kupplungsbetrieb übergegangen, da dann bereits ein gegenüber dem kalten Zustand mit hoher Viskosität deutlich verringertes Schleppmoment auftritt.

Vorzugsweise wird die Viskosität des Getriebeöls anhand einer Temperatur, vorzugsweise der Umgebungstemperatur oder der Temperatur des Getriebeöls, bestimmt. Dazu wird die Temperatur durch einen Temperatursensor gemessen. Alternativ kann sie auch über ein Rechenmodell, wie es beispielsweise in der EP 0 479 464 B1 beschrieben ist, bestimmt werden.

Bevorzugter Weise wird zusätzlich die Stillstandszeit des Fahrzeugs bestimmt, da selbst bei sehr tiefen Temperaturen (< -10°C) aber sehr kurzen Stillstandszeiten das Getriebeöl Restwärme speichert und somit keine deutlich erhöhte Viskosität aufweist.

Vorzugsweise wird zur Überprüfung, wie lange der Kupplungssteuerungsbetrieb für tiefe Temperaturen aufrechterhalten soll, eine Getriebeöltemperatur gemessen. Dadurch ist die genaueste Zeitdauer festlegbar, während derer der gegenüber dem Normalbetrieb veränderte Betrieb der Kupplungssteuerung angewendet wird.

Alternativ oder zusätzlich kann vorzugsweise festgelegt werden, dass nach Ablauf einer vorgegebenen Zeit mit auf tiefe Temperaturen angepasster Kupplungs-/Getriebesteuerung auf Normalbetrieb umgeschaltet wird, d.h. dass die veränderte Kupplungssteuerung maximal während einer festgelegten Zeit aufrechterhalten wird.

Die Übertragung von zusätzlicher Kupplungsenergie an das Getriebeöl findet bevorzugter Weise durch Erhöhen der Anfahrdrehzahl, durch verlängerte Schlupfphasen bei Anfahrten und Schaltungen oder durch eine Umschaltung auf ein Schlupfregelungskennfeld, das speziell für tiefe Temperaturen gilt und eine erhöhte Schlupfdrehzahl aufweist, statt. Auch Kombinationen der genannten Maßnahmen sind möglich. Die Verwendung eines speziell angepassten Schlupfregelungskennfelds speziell für tiefe Temperaturen hat den Vorteil, dass neben einem erhöhten Energie- bzw. Wärmeeintrag in das Getriebeöl eine bessere Isolation des Verbrennungsmotors im Hinblick auf Schwingungen oder Stöße möglich ist zur Kompensation von unruhigen Laufeigenschaften bei tiefen Temperaturen.

Grundsätzlich reicht es aus, eine der genannten Maßnahmen zum Eintragen von Kupplungsenergie in das Getriebeöl vorzusehen. Eine Erhöhung der Wirkung wird durch Kombinationen der genannten Maßnahmen oder anderer zusätzlicher Kupplungssteuerungsmaßnahmen erreicht.

Ob das Verfahren zur Kupplungssteuerung für tiefe Temperaturen ausgeführt wird, kann vor jedem Start oder bei jedem Start eines Kraftfahrzeugs festgestellt werden. Diese Überprüfung kann auf die Wintermonate begrenzt werden, indem die Viskosität des Kupplungsfluids nur dann beurteilt wird, wenn ein Bordrechner "Winter" feststellt, z.B. abhängig von Kalenderinformation, oder wenn der Fahrer einen Wintermodus des Fahrzeugs aktiviert hat.

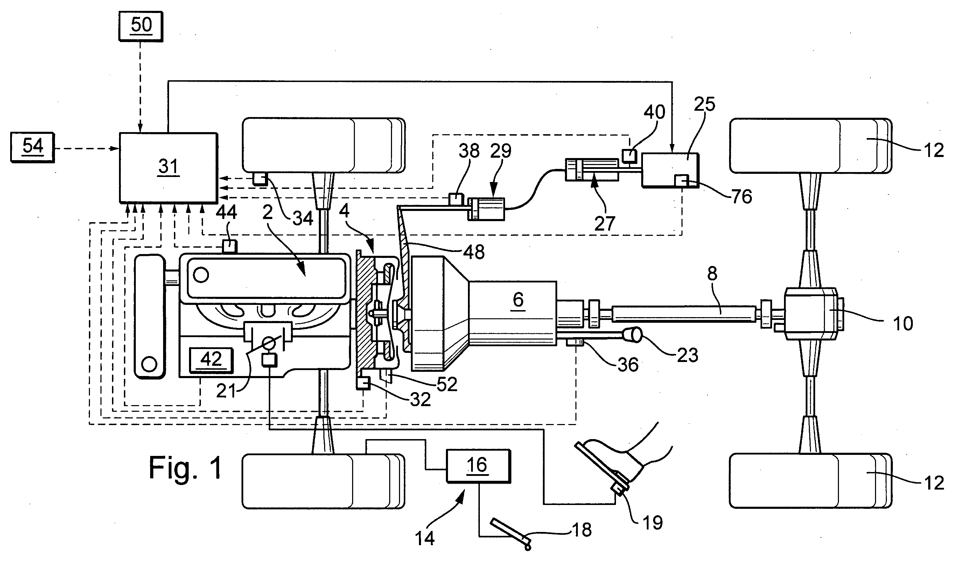

Nachfolgend wird die Erfindung beispielhaft anhand der beigefügten Zeichnung erläutert.

Die beigefügte Figur zeigt einen Antriebsstrang eines Kraftfahrzeugs mit einem Blockschaltbild der Kupplungssteuerungsvorrichtung.

Das Kraftfahrzeug weist einen Motor, beispielsweise eine Brennkraftmaschine 2 auf, die über eine Kupplung 4 mit einem Getriebe, vorzugsweise einem Parallelschaltgetriebe 6, verbunden ist. Das Getriebe treibt über eine Kardanwelle 8 und ein Differential 10 die Hinterräder 12 des Fahrzeugs an. Zur Abbremsung des Fahrzeugs ist eine Bremsanlage 14 mit einem Bremsgerät 16 vorgesehen, das über ein Bremspedal 18 betätigt wird. Wenngleich nur die Verbindung vom Bremsgerät 16 zu dem linken Vorderrad dargestellt ist, versteht sich, dass das Bremsgerät 16 mit allen Rädern des Kraftfahrzeugs zusammenwirkt.

Zur Steuerung der Last der Brennkraftmaschine 2 dient ein Fahrpedal 19, das eine Drosselklappe 21 ansteuert. Das Getriebe 6 wird mittels eines Schalthebels 23 geschaltet. Die Kupplung 4 ist automatisiert und wird von einer Betätigungseinheit, wie z.B. von einem Aktor 25, über einen Geberzylinder 27 und Nehmerzylinder 29 betätigt. Die Kupplung ist vorzugsweise eine Nassdoppelkupplung. Doppelkupplungen werden z.B. für Parallelschaltgetriebe verwendet. Nasskupplungen sind solche Kupplungen, welche im Ölbad liegen und dort bewegt werden. Bei einer Nassdoppelkupplung 4 sind zwei Kupplungsaktoren und entsprechende Kupplungsansteuerungen aus Geberzylinder/Nehmerzylinder (Referenzzeichen 25, 27, 29) vorgesehen, von denen in der Zeichnung nur jeweils ein Element dargestellt ist. Der Nehmerzylinder 29 wirkt mit einem Kupplungshebel 48 zusammen, der von einer nicht dargestellten Kupplungsrückstellfeder in seine Ruhelage gedreht ist, in der die Kupplung 4 vollständig geschlossen ist, d.h. maximales Moment übertragen kann.

Der Aktor 25 wird von einer Steuereinheit, wie z.B. einem elektronischen Steuergerät 31 aus angesteuert, das einen Mikroprozessor enthält und Daten von beispielsweise einem Sensor 32 für die Drehzahl der Brennkraftmaschine, einem Sensor 34 zur Erfassung der Raddrehzahl des Fahrzeugs, einem Sensor 36 zur Erfassung eines Schaltwunschs durch Betätigung des Ganghebels 23, einem Sensor 38 zur Erfassung der Stellung der Kupplung 4, einem Sensor 40 für die Stellung des Aktors 25, einem Sensor 42 zur Erfassung der Kühlwassertemperatur, einem Sensor 44 zur Erfassung der Temperatur der Ansaugluft erhält.

Zusätzlich weist die Vorrichtung eine Ermittlungseinheit in Form eines Temperatursensors 50 zur Ermittlung einer Temperatur auf. Die erfasste Temperatur, z.B. wird ebenfalls dem Steuergerät 31, das die Kupplung 4 ansteuert, zugeführt. Statt die Außentemperatur über den Temperatursensor 50 zu erfassen kann auch die Getriebeöltemperatur durch einen Sensor 52 erfasst werden oder es kann eine Getriebeöltemperatur aus dem Drehzahlverhalten der Getriebewelle abgeschätzt werden.

Bei einem sehr kalten Getriebeöl, wenn beispielsweise die Außentemperatur unter-10°C sinkt und das Fahrzeug während längerer Zeit im Stillstand ist, was durch einen mit der Zündung zusammenwirkenden Taktgeber 54 erfasst wird und an das Steuergerät 31 weitergeleitet wird, kann die Viskosität des Getriebeöls, in dem die Nasskupplung liegt, derart erhöht sein, dass beim Schalten merkliche Zeitverzögerungen auftreten. In diesem Fall bestimmt das Steuergerät 31 anhand der durch den Temperatursensor 50 und/oder den Temperatursensor 52 oder eine alternative Einrichtung erfassten Temperatur in Verbindung mit der mittels des Sensors 54 erfassten Stillstandszeit des Fahrzeugs die erhöhte Viskosität des Getriebeöls. Die Viskosität des Getriebeöls könnte auch anderweitig erfasst werden, was jedoch im Verhältnis zu einer Temperaturmessung aufwändig ist und daher nicht bevorzugt wird.

Wenn das Steuergerät 31 feststellt, dass eine erhöhte Getriebeölviskosität aufgrund niedriger Temperaturen vorliegt, passt es die Kupplungssteuerung für die Kupplung 4 auf einen Betrieb bei niedrigen Temperaturen an. Insbesondere wird ein Betriebszustand gewählt, bei dem die Kupplung 4 zusätzliche Kupplungsenergie, beispielsweise Schleifenergie oder durch Schlupf entstehende Reibenergie an das Getriebeöl überträgt. Dadurch wird das Getriebeöl neben der Erwärmung durch den normalen Motorbetrieb zusätzlich durch die von der Kupplung durch die veränderte Kupplungssteuerung übertragene Energie erwärmt, was zu einem rascheren Übergang des Getriebeöls auf kleinere Viskositäten führt. Das Steuergerät erfasst während des veränderten Betriebs, d.h. der Kupplungssteuerung bei niedrigeren Temperaturen, durch den Temperatursensor 52 weiterhin die Getriebeöltemperatur und schaltet beim Erreichen einer Getriebeöltemperatur, die einer tolerierbar niedrigen Viskosität entspricht, oder bei einer Getriebeöltemperatur, die der Betriebstemperatur entspricht, auf Normalbetrieb um. Geeignete Maßnahmen, die das Steuergerät 31 während des veränderten Kupplungsbetriebs einleiten und überwachen kann, sind die Erhöhung der Anfahrdrehzahl, verlängerte Schlupfphasen bei Anfahrten und Schaltungen und/oder die Verwendung eines Schlupfregelungskennfelds für die Kupplung 4, das speziell für tiefe Temperaturen aufgestellt ist und erhöhte Schlupfdrehzahlen aufweist. Vorzugsweise werden diese Maßnahmen kombiniert vom Steuergerät 31 gesteuert.

### Bezugszeichenliste

- 2: Brennkraftmaschine
- 4: Kupplung
- 6: Getriebe
- 8: Kardanwelle
- 10: Differential
- 12: Hinterräder
- 14: Bremsanlage
- 16: Bremsgerät
- 18: Bremspedal
- 19: Fahrpedal 48
- 21: Drosselklappe
- 23: Schalthebel
- 25: Aktor
- 27: Geberzylinder
- 29: Nehmerzylinder
- 31: Steuergerät
- 32: Sensor
- 34: Sensor
- 36: Sensor
- 38: Sensor
- 40: Sensor
- 42: Sensor
- 44: Sensor
- Sensor 50: Temperatursensor
- 52: Sensor
- 54: Taktgeber

## Patentansprüche

1. Verfahren zur Kupplungssteuerung von Nasskupplungen, enthaltend die Schritte
(a) Bestimmen, ob eine Viskosität von Kupplungsfluid über einem vorgegebenen Schwellenwert liegt;
(b) wenn die in Schritt (a) bestimmte Viskosität über dem vorgegebenen Schwellenwert liegt: Anpassen der Kupplungs-/Getriebesteuerung bezüglich der Kupplungs-/Getriebesteuerung für einen Normalbetrieb derart, dass an das Kupplungsfluid zusätzliche Kupplungsenergie übertragen wird und das Kupplungsfluid durch die zusätzliche Energie erwärmt wird;
(c) nach Schritt (b): Überprüfen, ob die Viskosität des Kupplungsfluids noch über dem Schwellenwert liegt und bei Unterschreiten des Schwellenwerts: Rückkehr zur Kupplungs-/Getriebesteuerung für den Normalbetrieb.

2. Verfahren nach Anspruch 1, **dadurch gekennzeichnet, dass** die Viskosität des Kupplungsfluids anhand einer Temperatur, vorzugsweise der Umgebungstemperatur oder der Temperatur des Getriebeöls als Kupplungsfluid bestimmt wird.

3. Verfahren nach Anspruch 2, **dadurch gekennzeichnet, dass** die Viskosität des Kupplungsfluids mittels der Umgebungstemperatur und einer Stillstandszeit des Fahrzeugs bestimmt wird.

4. Verfahren nach einem der vorhergehenden Ansprüche, **dadurch gekennzeichnet, dass** in Schritt (c) zur Überprüfung die Temperatur des Kupplungsfluids gemessen wird.

5. Verfahren nach einem der vorhergehenden Ansprüche, **dadurch gekennzeichnet, dass** in Schritt (c) der Ablauf einer vorgegebenen Zeit mit angepasster Kupplungs-/Getriebesteuerung zur Überprüfung verwendet wird.

6. Verfahren nach einem der vorhergehenden Ansprüche, **dadurch gekennzeichnet, dass** in Schritt (b) die Kupplungs-/Getriebesteuerung durch Erhöhen der Anfahrdrehzahl angepasst wird.

7. Verfahren nach einem der vorhergehenden Ansprüche, **dadurch gekennzeichnet, dass** in Schritt (b) die Kupplungs-/Getriebesteuerung durch verlängerte Schlupfphasen bei Anfahrten und Schaltungen angepasst wird.

8. Verfahren nach einem der vorhergehenden Ansprüche, **dadurch gekennzeichnet, dass** in Schritt (b) die Kupplungs-/Getriebesteuerung durch Verwenden eines Schlupfregelungskennfelds für tiefe Temperaturen, das erhöhte Schlupfdrehzahlen aufweist, angepasst wird.
